# EUROPEAN PATENT APPLICATION

(11) **EP 2 600 294 A1**
(43) Date of publication of application: **05.06.2013**
(21) Application number: 12192800.6
(22) Date of filing: 15.11.2012
(51) Int. Cl.: G06Q 10/10, G06Q 10/06

(54) **Reporting work with user profile contacts**

(30) Priority: 30.11.2011 US 201113307015
(71) Applicant: Microsoft Corporation, Redmond, Washington 98052 (US)
(72) Inventor: Garg, Sunil, Redmond, WA 98052 (US); Mueller, Lisa R., Redmond, WA 98052 (US); Ehrenberg, Michael V., Redmond, WA 98052 (US)
(74) Representative: Grünecker, Kinkeldey, Stockmair & Schwanhäusser

(57) **Abstract**

User input can be received at a client computing device. The user input can request one or more contacts for a user profile in a work tracking system that is remote from the client computing device. In response to the user input, information on one or more user profile contacts associated with the user profile in the work tracking system can be retrieved. At least one of the user profile contact(s) can be linked with one or more corresponding existing contacts in the client computing device. Work unit information (such as time information) that is associated with one of the user profile contact(s) can be captured in the client computing device and reported to the work tracking system over a computer network.

## Description

### BACKGROUND

Workers often enter work units such as time into work tracking systems. As used herein, a work tracking system is a system that tracks units of work, such as units of time, units of items produced by a worker, units of items consumed by a worker while working, etc. An example of a work tracking system is an enterprise resource planning (ERP) system. ERP systems often maintain representations of projects and tasks, as well as user profiles for workers assigned to those tasks and time spent on those tasks by the associated workers. Time spent on tasks has been manually entered into the ERP system by workers. In an ERP system, the user profiles can be associated with tasks to which the workers represented by the user profiles are assigned.

### SUMMARY

The tools and techniques discussed herein relate to the reporting of work units such as time from a client computing device to a work tracking system. The work units can be associated with one or more user profile contacts, which have been retrieved from the work tracking system and which may have been linked to existing contacts on the client computing device. As used herein, a user profile contact is data representing a contact that is associated with the user profile. For example, a user profile contact may be a business contact associated with the user profile. The work unit information reported to the work tracking system may or may not identify the user profile contact(s) associated with the work unit information. Also, the reported work unit information may include additional information besides a quantity of work units (e.g., quantity of time), such as start and end time/date, task or project worked on, location information, comments, etc.

In an embodiment of the tools and techniques, user input is received at a client computing device. The user input can request one or more contacts for a user profile in a work tracking system that is remote from the client computing device. For example, the user profile may be a user profile for a user that entered the user input or for someone who directed the user to enter the user input. In response to the user input, information on one or more user profile contacts associated with the user profile in the work tracking system can be retrieved. At least one of the user profile contact(s) can be linked with one or more existing contacts in the client computing device. Time information that is associated with one of the user profile contact(s) can be captured in the client computing device and reported over a computer network to the work tracking system.

In yet another embodiment of the tools and techniques, user input can be received at a client computing device. The user input can request one or more contacts for a user profile in a work tracking system that is remote from the client computing device. In response to the user input, information on one or more user profile contacts associated with the user profile in the work tracking system can be retrieved. Work unit information that is associated with one of the user profile contact(s) can be captured in the client computing device and reported to the work tracking system over a computer network.

This Summary is provided to introduce a selection of concepts in a simplified form. The concepts are further described below in the Detailed Description. This Summary is not intended to identify key features or essential features of the claimed subject matter, nor is it intended to be used to limit the scope of the claimed subject matter. Similarly, the invention is not limited to implementations that address the particular techniques, tools, environments, disadvantages, or advantages discussed in the Background, the Detailed Description, or the attached drawings.

### BRIEF DESCRIPTION OF THE DRAWINGS

Fig. 1 is a block diagram of a suitable computing environment in which one or more of the described embodiments may be implemented.

Fig. 2 is a schematic diagram of a work unit reporting environment.

Fig. 3 is a diagram of a mobile telephone with a screen shot that is part of an example implementation of reporting work units.

Fig. 4 is a diagram of a mobile telephone with another screen shot that is part of the example implementation of reporting work units.

Fig. 5 is a diagram of a mobile telephone with another screen shot that is part of the example implementation of reporting work units.

Fig. 6 is a diagram of a mobile telephone with another screen shot that is part of the example implementation of reporting work units.

Fig. 7 is a diagram of a mobile telephone with another screen shot that is part of the example implementation of reporting work units.

Fig. 8 is a diagram of a mobile telephone with another screen shot that is part of the example implementation of reporting work units.

Fig. 9 is a diagram of a mobile telephone with another screen shot that is part of the example implementation of reporting work units.

Fig. 10 is a diagram of a mobile telephone with another screen shot that is part of the example implementation of reporting work units.

Fig. 11 is a diagram of a mobile telephone with another screen shot that is part of the example implementation of reporting work units.

Fig. 12 is a diagram of a mobile telephone with another screen shot that is part of the example implementation of reporting work units.

Fig. 13 is a diagram of a mobile telephone with another screen shot that is part of the example implementation of reporting work units.

Fig. 14 is a diagram of a mobile telephone with another screen shot that is part of the example implementation of reporting work units.

Fig. 15 is a diagram of a mobile telephone with another screen shot that is part of the example implementation of reporting work units.

Fig. 16 is a diagram of a mobile telephone with another screen shot that is part of the example implementation of reporting work units.

Fig. 17 is a diagram of a mobile telephone with another screen shot that is part of the example implementation of reporting work units.

Fig. 18 is a diagram of a mobile telephone with another screen shot that is part of the example implementation of reporting work units.

Fig. 19 is a flowchart of a technique for reporting work with user profile contacts.

Fig. 20 is a flowchart of another technique for reporting work with user profile contacts.

Fig. 21 is a flowchart of yet another technique for reporting work with user profile contacts.

### DETAILED DESCRIPTION

Embodiments described herein are directed to techniques and tools for improved reporting of work unit information, such as time information, to work tracking systems. For example, such reporting may be used by workers in an organization that requires the workers to log time for the hours worked on specific tasks. Such improvements may result from the use of various techniques and tools separately or in combination.

Such techniques and tools may include importing business contacts from a work tracking system (such as an ERP system) onto a client computing device (such as a handheld mobile device). The imported contacts can be linked to existing contacts on the client computing device. This can allow work units such as time to be reported in a convenient way while performing operations of the client computing device, such as making phone calls to or schedule meetings with these contacts. For example, a time reporting application can automatically retrieve this information from data structures on the client computing device, such as from an appointment in a personal information management application (for a meeting) or from telephone call logs (for a telephone call) and could report the time to the work tracking system over a computer network, such as directly to the work tracking system or via cloud based services.

In one implementation, a time reporting application on a client computing device (e.g., a mobile telephone, a tablet computer, etc.) can capture time from a calendar data structure and from a phone call log for meetings with and telephone calls to a business contact, which has been retrieved from a work tracking system. The time reporting application can automatically capture the time information including start date and time and end date and time for the meetings and/or phone calls made to the business contact. The time reporting application can send this information to the work tracking system via a computer network. This implementation can also allow users to download business contacts from their work tracking system to their client computing device. The implementation may also allow users to link downloaded business contacts to existing contacts, as well as to report time for work associated with a business contact. Additional metadata may be associated with the time, such as a task being worked on with the business contact, a location (such as an address or latitude/longitude from a global positioning sensor in the mobile telephone), start date and time and end date and time to a meeting with or telephone call made to a business contact. This metadata can be reported to a work tracking system, such as a company's time reporting system. The time reporting may be done directly over a computer network (e.g., a proprietary wireless data network and/or a global computer network) or over a computer network via a cloud based service. The cloud based service can push the information from the mobile telephone to the work tracking system. The time reporting application may also include additional functionality, such as allowing a user to view a history of time captured and/or reported on the client computing device, allowing a user to view a status of a particular task or project (e.g., how much time has been reported to the time reporting system from all devices for a particular task, project, or business contact).

Accordingly, one or more benefits can be realized from the work unit reporting tools and techniques described herein. For example, the tools and techniques discussed herein may make it easier for workers to record work units such as time using handheld mobile devices, such as mobile telephones.

The subject matter defined in the appended claims is not necessarily limited to the benefits described herein. A particular implementation of the invention may provide all, some, or none of the benefits described herein. Although operations for the various techniques are described herein in a particular, sequential order for the sake of presentation, it should be understood that this manner of description encompasses rearrangements in the order of operations, unless a particular ordering is required. For example, operations described sequentially may in some cases be rearranged or performed concurrently. Moreover, for the sake of simplicity, flowcharts may not show the various ways in which particular techniques can be used in conjunction with other techniques.

Techniques described herein may be used with one or more of the systems described herein and/or with one or more other systems. For example, the various procedures described herein may be implemented with hardware or software, or a combination of both. For example, dedicated hardware implementations, such as application specific integrated circuits, programmable logic arrays and other hardware devices, can be constructed to implement at least a portion of one or more of the techniques described herein. Applications that may include the apparatus and systems of various embodiments can broadly include a variety of electronic and computer systems. Techniques may be implemented using two or more specific interconnected hardware modules or devices with related control and data signals that can be communicated between and through the modules, or as portions of an application-specific integrated circuit. Additionally, the techniques described herein may be implemented by software programs executable by a computer system. As an example, implementations can include distributed processing, component/object distributed processing, and parallel processing. Moreover, virtual computer system processing can be constructed to implement one or more of the techniques or functionality, as described herein.

### I. Exemplary Computing Environment

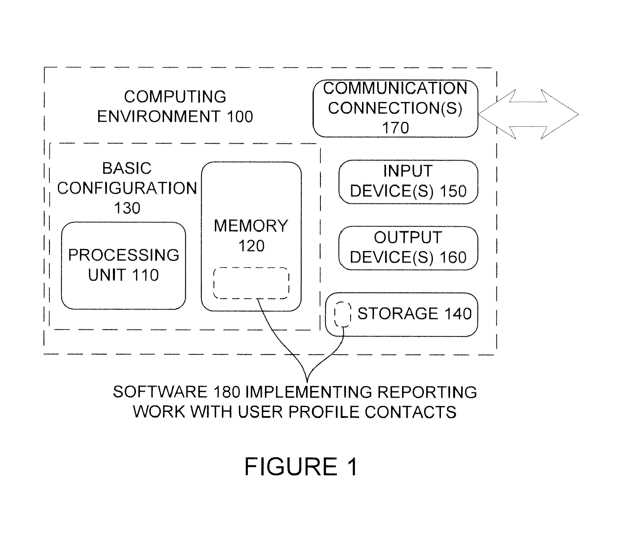

Fig. 1 illustrates a generalized example of a suitable computing environment (100) in which one or more of the described embodiments may be implemented. For example, one or more such computing environments can be used as a client computing device, a work tracking system and/or a cloud based reporting service. Generally, various different general purpose or special purpose computing system configurations can be used. Examples of well-known computing system configurations that may be suitable for use with the tools and techniques described herein include, but are not limited to, server farms and server clusters, personal computers, server computers, hand-held or laptop devices, slate devices, multiprocessor systems, microprocessor-based systems, programmable consumer electronics, network PCs, minicomputers, mainframe computers, distributed computing environments that include any of the above systems or devices, and the like.

The computing environment (100) is not intended to suggest any limitation as to scope of use or functionality of the invention, as the present invention may be implemented in diverse general-purpose or special-purpose computing environments.

With reference to Fig. 1, the computing environment (100) includes at least one processing unit (110) and memory (120). In Fig. 1, this most basic configuration (130) is included within a dashed line. The processing unit (110) executes computer-executable instructions and may be a real or a virtual processor. In a multi-processing system, multiple processing units execute computer-executable instructions to increase processing power. The memory (120) may be volatile memory (*e.g*., registers, cache, RAM), non-volatile memory (*e.g.,* ROM, EEPROM, flash memory), or some combination of the two. The memory (120) stores software (180) implementing reporting of work with user profile contacts.

Although the various blocks of Fig. 1 are shown with lines for the sake of clarity, in reality, delineating various components is not so clear and, metaphorically, the lines of Fig. 1 and the other figures discussed below would more accurately be grey and blurred. For example, one may consider a presentation component such as a display device to be an I/O component. Also, processors have memory. The inventors hereof recognize that such is the nature of the art and reiterate that the diagram of Fig. 1 is merely illustrative of an exemplary computing device that can be used in connection with one or more embodiments of the present invention. Distinction is not made between such categories as "workstation," "server," "laptop," "handheld device," etc., as all are contemplated within the scope of Fig. 1 and reference to "computer," "computing environment," or "computing device."

A computing environment (100) may have additional features. In Fig. 1, the computing environment (100) includes storage (140), one or more input devices (150), one or more output devices (160), and one or more communication connections (170). An interconnection mechanism (not shown) such as a bus, controller, or network interconnects the components of the computing environment (100). Typically, operating system software (not shown) provides an operating environment for other software executing in the computing environment (100), and coordinates activities of the components of the computing environment (100).

The storage (140) may be removable or non-removable, and may include computer-readable storage media such as magnetic disks, magnetic tapes or cassettes, CD-ROMs, CD-RWs, DVDs, or any other medium which can be used to store information and which can be accessed within the computing environment (100). The storage (140) stores instructions for the software (180).

The input device(s) (150) may be a touch input device such as a keyboard, mouse, pen, or trackball; a voice input device; a scanning device; a network adapter; a CD/DVD reader; or another device that provides input to the computing environment (100). The output device(s) (160) may be a display, printer, speaker, CD/DVD-writer, network adapter, or another device that provides output from the computing environment (100).

The communication connection(s) (170) enable communication over a communication medium to another computing entity. Thus, the computing environment (100) may operate in a networked environment using logical connections to one or more remote computing devices, such as a personal computer, a server, a router, a network PC, a peer device or another common network node. The communication medium conveys information such as data or computer-executable instructions or requests in a modulated data signal. A modulated data signal is a signal that has one or more of its characteristics set or changed in such a manner as to encode information in the signal. By way of example, and not limitation, communication media include wired or wireless techniques implemented with an electrical, optical, RF, infrared, acoustic, or other carrier.

The tools and techniques can be described in the general context of computer-readable media, which may be storage media or communication media. Computer-readable storage media are any available storage media that can be accessed within a computing environment, but the term computer-readable storage media does not refer to propagated signals per se. By way of example, and not limitation, with the computing environment (100), computer-readable storage media include memory (120), storage (140), and combinations of the above.

The tools and techniques can be described in the general context of computer-executable instructions, such as those included in program modules, being executed in a computing environment on a target real or virtual processor. Generally, program modules include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing environment. In a distributed computing environment, program modules may be located in both local and remote computer storage media.

For the sake of presentation, the detailed description uses terms like "determine," "send," "receive," and "operate" to describe computer operations in a computing environment. These and other similar terms are high-level abstractions for operations performed by a computer, and should not be confused with acts performed by a human being, unless performance of an act by a human being (such as a "user" or "worker") is explicitly noted. The actual computer operations corresponding to these terms vary depending on the implementation.

### II. System and Environment for Reporting Work Units for User Profile Contacts

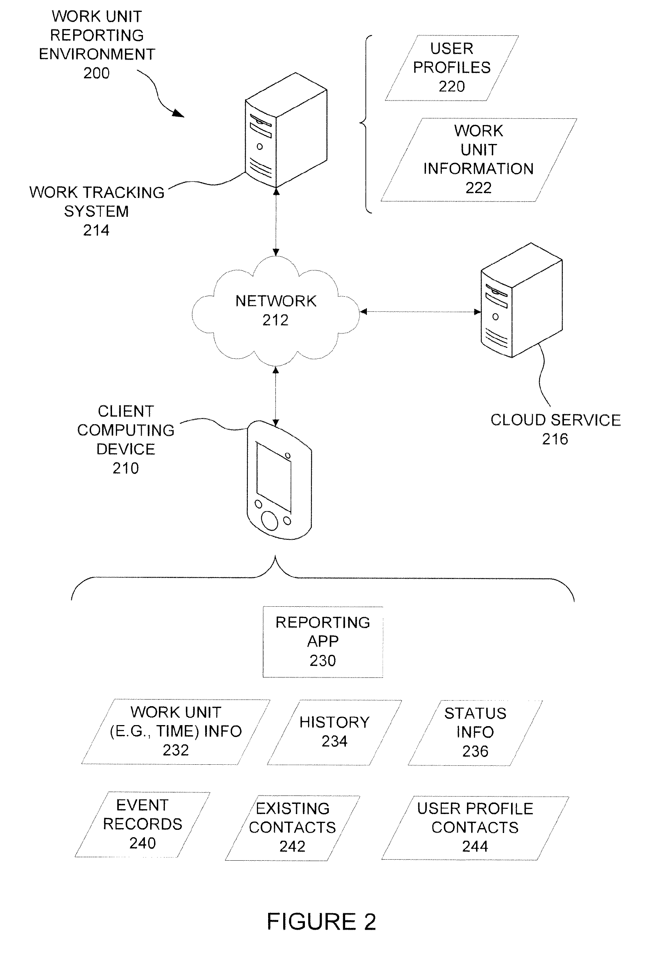

Fig. 2 is a schematic diagram of a work unit reporting environment (200) in conjunction with which one or more of the described embodiments may be implemented. The work unit reporting environment (200) can include a client computing device, such as a mobile telephone device, a slate device, or some other client computing device. The client computing device (210) can be connected to a computer network (212), such as a global computer network. The network (212) can in turn be connected to a work tracking system (214). The work tracking system (214) may be an ERS system, or some other type of work tracking system. The client computing device (210) can communicate with the work tracking system (214) via the computer network (212). This communication may be done directly, or it may be facilitated by one or more intermediaries, such as a cloud service (216). The cloud service (216) can be a computer service that is remote from the client computing device (210) and from the work tracking system (214), and that is connected to the computer network (212).

The work tracking system (214) can maintain information, such as in one or more databases. For example, the work tracking system (214) can maintain user profiles (220), which may represent a user, group of users, etc., as well as work unit information (222). For example, the user profiles (220) and the work unit information (222) may be part of a work break down structure, which can break down work information for projects, etc. The work tracking system (214) may associate each item of the work unit information (222) with a user profile (220), such as using associations within a work break down structure. The work tracking system (214) may also maintain other information, including other associations. For example, the work tracking system (214) may associate user profiles (220) with projects, tasks, user groups, other user profiles, etc. Additionally, the work unit information (222) may associate work units with user profiles, tasks, projects, etc.

The work tracking system (214) may include a communications service such as a web service, which can expose services to the client computing device (210). For example, these exposed services may include a service to expose at least a portion of the information in a work break down structure to the client computing device (210), such as information on user profiles (220) and work unit information (222) (e.g., for providing status information). The exposed services may also include a service to expose a list of time entry categories for a project, which could allow the selection of such categories by user input when reporting time from the client computing device (210). As another example, the exposed services may include a service to receive work unit information sent by the client computing device (210).

Additionally, the work tracking system (214) may provide an interface to allow user input to edit and use the work unit information (222), such as by including work unit information (222) received from the client computing device (210) on timesheets or other data structures associated with a user profile (220).

The client computing device (210) can host a reporting application (230), which can facilitate capturing work unit information (232) and reporting that information (232) to the work tracking system (214), such as by using one or more of the communication techniques discussed above. The reported work unit information (232) can associate work units with a user profile (220), and/or with one or more tasks, etc.

Additionally, the reporting application (230) may maintain a history (234) of captured work unit information, and may display all or part of that history (234) on a display of the client computing device (210). The history (234) may include information such as the work unit information (232), as well as other information such as whether the work unit information (232) has been selected to be reported to the work tracking system (214), and whether the each item of work unit information (232) has been reported to the work tracking system (214).

The client computing device (210) may receive status information (236) from the work tracking system (214), which can include information on the status of reported work unit information (222). The reported work unit information (236) in the status information (236) may include work unit information (232) reported from the client computing device (210), as well as work unit information (232) reported from other client computing devices. For example, the status information (236) may summarize the status of reported work unit information (222) on a particular task, or by a particular user profile (220).

The client computing device (210) can also maintain event records (240). For example, the event records (240) may include records of meetings or appointments (e.g., calendar records), records of telephone calls (e.g., call log records), records of messages (e.g., records of email messages, text messages, social networking site messages, chat sessions, etc.), records of items to be accomplished (e.g., tasks in a personal information management application) and/or records of other events. These events may be time-based events, so that the event records (240) may include information on time and/or date of event occurrence as well as information on duration of the event (e.g., duration of a meeting, duration of a phone call, etc.). The reporting application (230) can access the event records (240), such as by integrating with the applications that manage the events though application programming interfaces. Through such integration, the reporting application (230) can capture and report work unit information (232) associated with the records. The capturing and/or reporting may be done automatically. However, user input may be provided to opt into and/or out of time reporting. Also, user input may be obtained to verify that particular items of work unit information (232) are to be reported, and to edit or add information.

The client computing device (210) may also maintain existing contacts (242), which can be records of contacts. For example, the existing contacts (242) may be contacts listed on an address book in an application on the client computing device (210), contacts on a social networking site, etc.

Additionally, the client computing device (210) may receive user profile contacts (244) from the work tracking system (214). These user profile contacts (244) can be representations of user profiles (220) on the work tracking system (214). The user profile contacts (244) can be associated with a user profile (220) that is associated with the client computing device (210). For example, a user profile (220) associated with the client computing device (210) may be a user profile (220) on the work tracking system (214), for which user credentials (e.g., username, password, etc.) have been received at the client computing device (210) (e.g., by user input, as will be discussed below). One or more of the user profile contacts (244) may be linked with one or more existing contacts (242). Such linking can allow events for the linked existing contacts (242) to be associated with the linked user profile contact (244), which can the reporting application (230) to associate work unit information (232) for such events with the linked user profile contact (244), which can prompt reporting of the work unit information (232). This is because events that are associated with the user profile contacts (244), or with existing contacts (242) linked to the user profile contacts (244), can be considered to be associated with a corresponding user profile (220) from the work tracking system (214).

User input may be provided to configure a user profile contact (244) for time reporting by default, so that little, if any, user input is needed at the time of an event to report time for that event. Also, user input may be provided to associate a task or project with an event, which can allow the work unit information (232) to include information on associated tasks or projects.

### III. Implementation of Reporting Work with User Profile Contacts

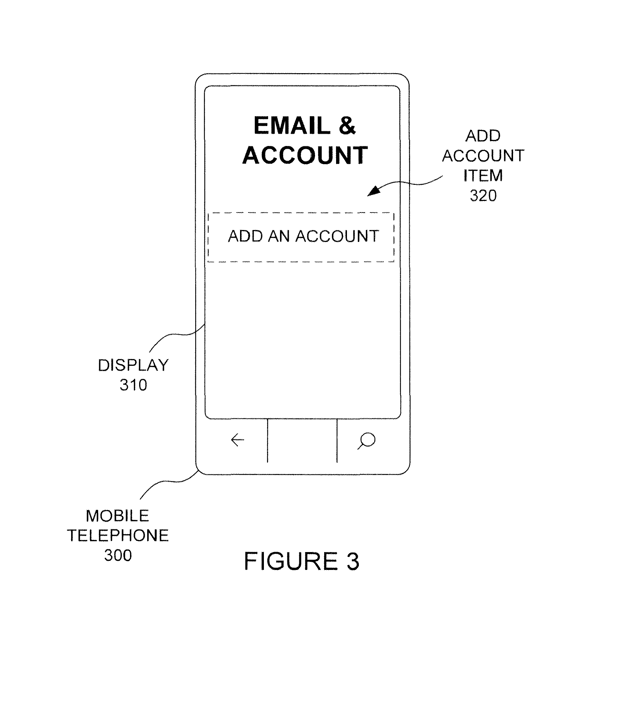

An example of an implementation in a client computing device in the form of a mobile telephone (300) with a display (310), such as a touch screen display, will now be discussed. Figures 3-17 illustrate examples of layouts for the display (310) for reporting work units, which are units of time in the examples. In the examples, user input may be provided in any of various ways, such as by making selections of items with a touch screen display, with a built-in keypad, with a voice command, with a peripheral data entry device, etc.

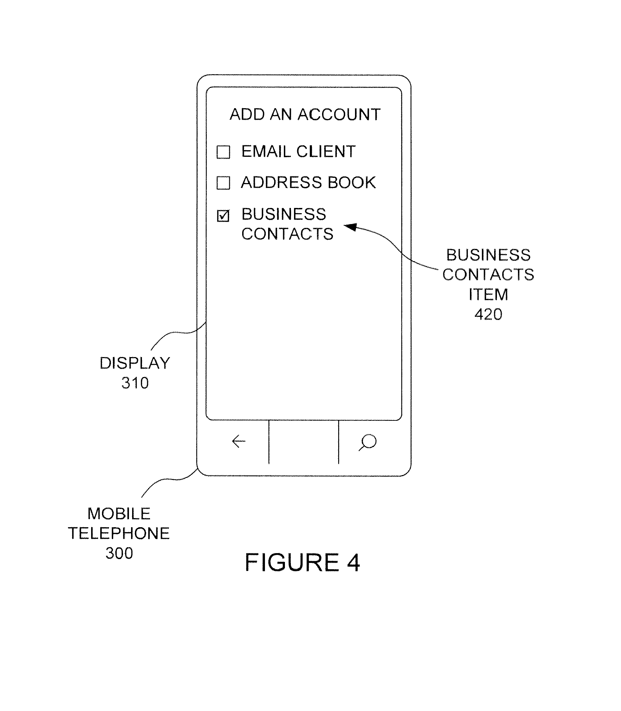

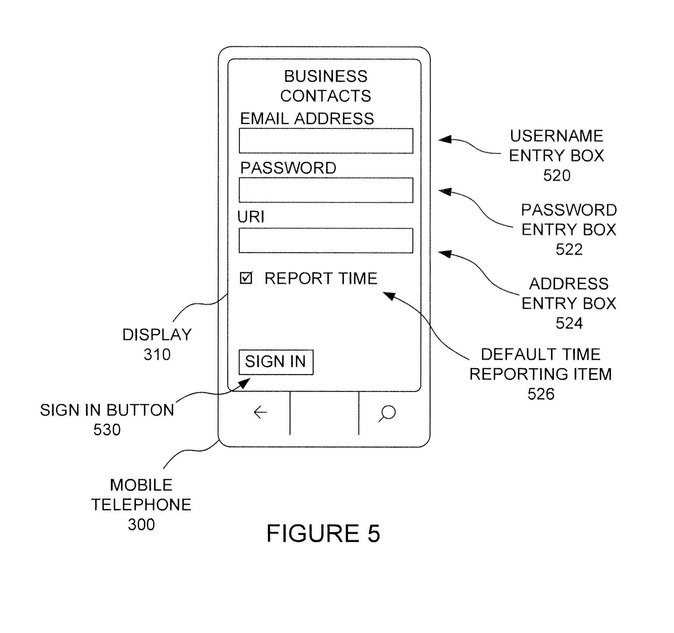

Referring Figs. 3-7, an example of retrieving user profile contacts, which are referred to as business contacts in this example, and linking the business contacts with existing contacts will be discussed. Referring to Fig. 3, the display (310) can display an add account item (320). The add account item (320) can be selected, as illustrated by the dashed line surrounding the add account item (320) in Fig. 3. In response, the mobile telephone (300) can surface the items illustrated in Fig. 4 on the display (310). Specifically, the display (310) can include items that can be selected for accounts to add, including a business contacts item (420). Selection of the business contacts item (420) can allow business contacts to be retrieved from a work tracking system, such as an ERP system or a general timekeeping system, by the mobile telephone (300). For example, selection of the business contacts item (420) can result in the mobile telephone (300) retrieving from the work tracking system business contacts that are associated with an active profile on the mobile telephone in some way. Accordingly, in response to the selection of the business contacts item (420), the dialog of Fig. 5 can be surfaced on the display (310).

The dialog of Fig. 5 can allow a user to enter user input information, such as user profile credentials and address information, which can allow the mobile telephone (300) to communicate with the work tracking system. In the example of Fig. 5, the dialog includes a username entry box (520) where a user can enter a username (such as an email address) for a profile on the work tracking system, a password entry box (522) where a user can enter a password for the profile, and an address entry box (524) where a user can enter an address (such as a uniform resource identifier) for communicating with the work tracking system. Additionally, the dialog can include a default time reporting item (526), which can be selected to indicate that, as a default, time is to be entered for business contacts retrieved from the work tracking system. Additionally, the dialog can include a sign-in button (530), which can be selected after the other information has been entered in the boxes (520, 522, and 524) to retrieve the business contacts from the work tracking system.

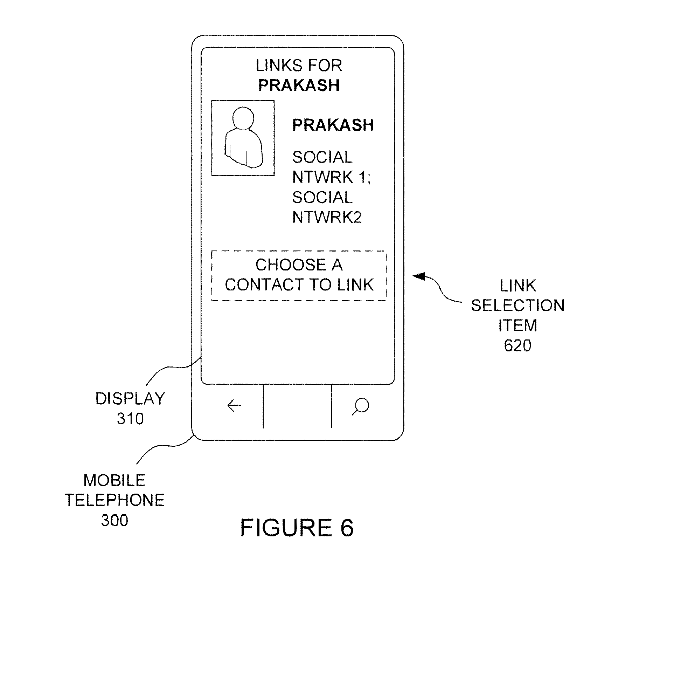

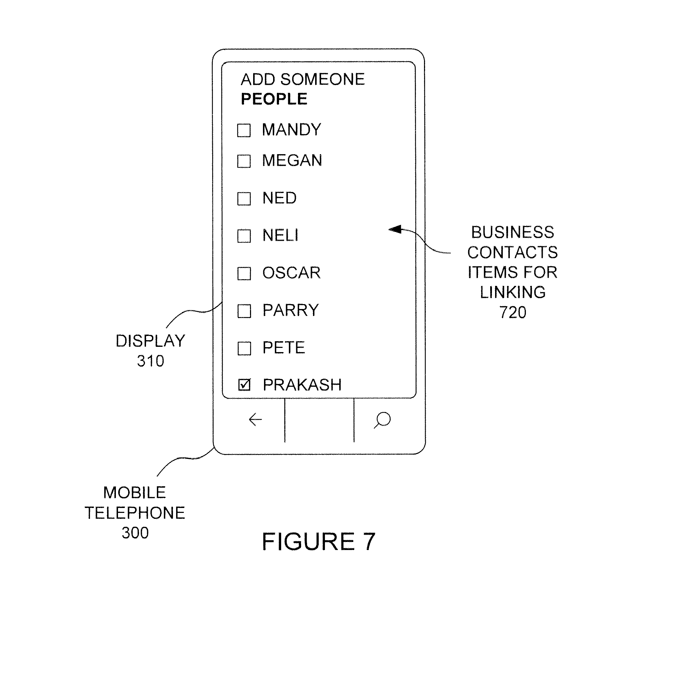

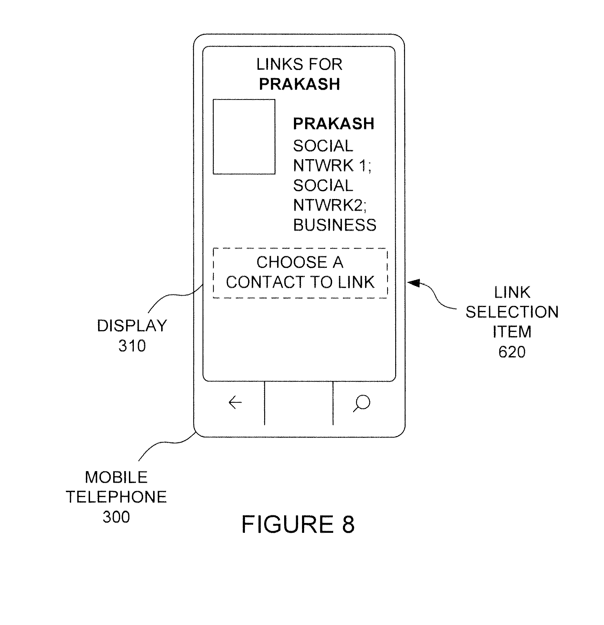

Fig. 6 illustrates an example of a dialog for an existing contact (named "PRAKASH") on the mobile telephone. The dialog indicates that there are two contacts for PRAKASH that have been linked-one for SOCIAL NETWORK 1, and one for SOCIAL NETWORK 2. The dialog in the display (310) in Fig. 6 also includes a link selection item (620), which can be selected to allow this existing contact to be linked to other contacts. Selection of the link selection item (620) can surface the dialog of Fig. 7, which lists business contact items (720) for linking. One of those listed business contacts is "PRAKASH." Selection of the "PRAKASH" business contact item (720) can link that business contact with the existing "PRAKASH" contacts discussed above. As illustrated in Fig. 8, the dialog for PRAKASH can now list "BUSINESS", indicating the linking of the business contact with the existing contacts. There may also be a dialog that allows user input to select whether time is to be reported for this particular business contact (not shown). Such a selection can override the default selection discussed above. Linking the business contact to existing contacts can allow the work unit capture functionality of the mobile telephone (300) to capture time information when events occur for any of the contacts that are linked to a user profile contact (a business contact in this example) from the work tracking system.

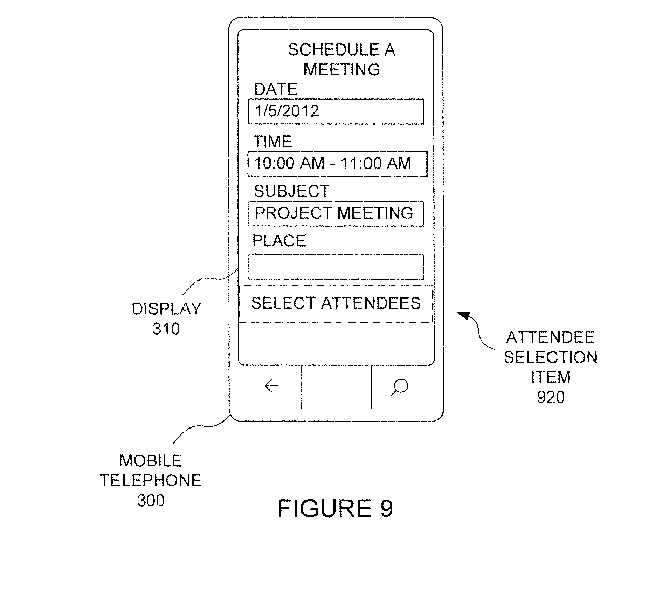

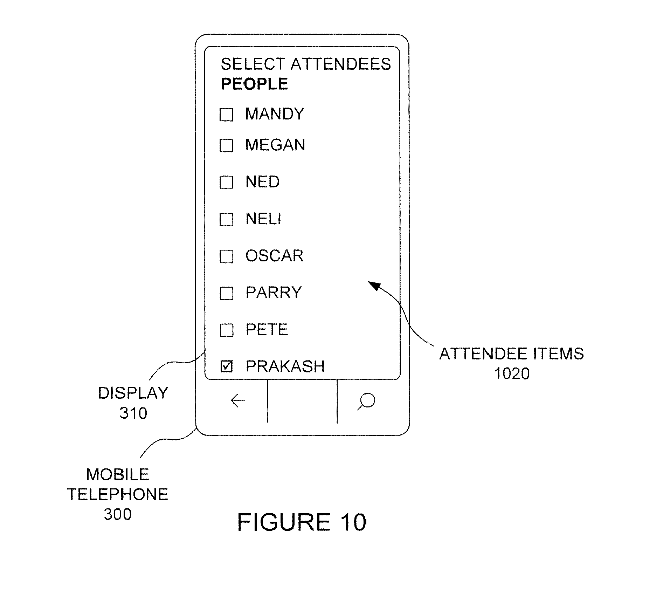

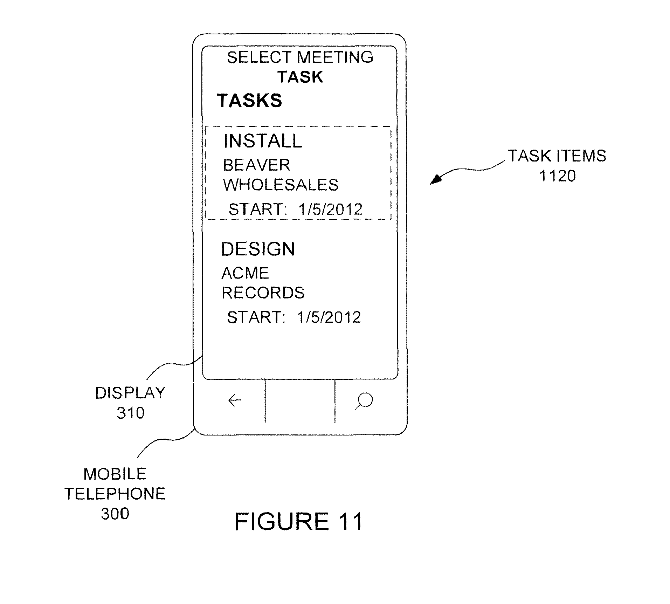

Referring now to Fig. 9, time information capture for a meeting event will be discussed with reference to Figs. 9-12. Fig. 9 illustrates an example of a dialog on the display (310) that includes data entry items for scheduling a meeting. Among the data entry items in the dialog is an attendee selection item (920). Selection of the attendee selection item (920) can result in the mobile telephone (300) displaying the dialog of Fig. 10, which includes a list of attendee items (1020). Selection of one of the attendee items (1020), as indicated by the checkbox next to the PRAKASH attendee item (1020), can select that attendee for the meeting being scheduled. Such a selection may result in a meeting invite being sent to one or more contacts for the attendee item (1020). Additionally, if the selected attendee item (1020) is associated with a business contact from the work tracking system (such as the PRAKASH item, as discussed above), then time may be reported for that meeting (for example, this may occur if the selections for time reporting have been made by default and/or made for that particular contact). Additionally, a dialog such as the one illustrated in Fig. 11 may be displayed to allow a displayed task item (1120) corresponding to a task in the work tracking system to be selected. Selection of such a task item (1120) (as illustrated by the dashed line around the "INSTALL" task item of Fig. 11) can associate that task with the meeting, so that the task can be indicated in the reported time information for that meeting.

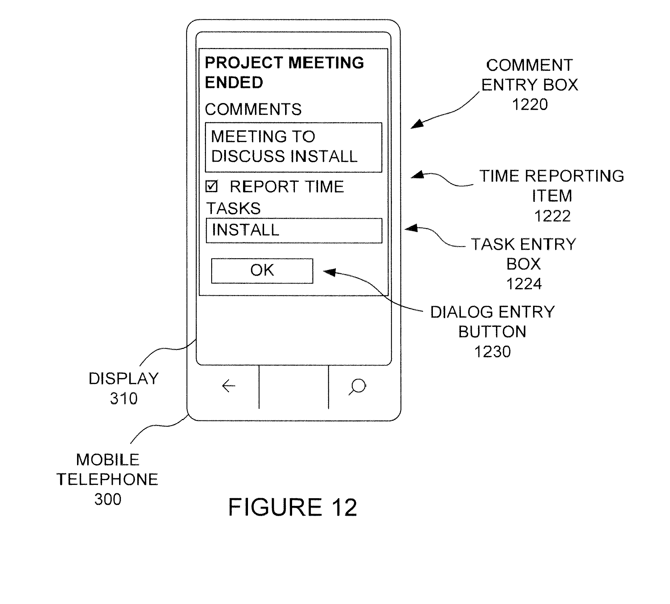

When the meeting is completed, the time information for the meeting may be reported automatically without user input. Alternatively, the time information may be captured automatically by the work unit reporting application, as discussed above, and the work unit reporting application can bring up a dialog on the display (310) allowing a user to confirm that the time information is to be reported. Such a dialog is illustrated in Fig. 12. As illustrated, the dialog can include a comment entry box (1220) for entering comments, a time reporting item (1222) for indicating that time is to be reported for that meeting, and a task entry box (1224) for entering a task to be associated with reported time for the meeting. The task entry box (1224) may already be filled in if a task was selected when scheduling the meeting. Additionally, a dialog entry button (1230) can be selected when the information has been entered in the dialog. If the time reporting item (1222) has been selected, then selection of the dialog entry button (1230) can serve as user input to confirm that time is to be reported for the meeting, and the captured time information (including the information entered in the dialog of Fig. 12) can be sent to the work tracking system.

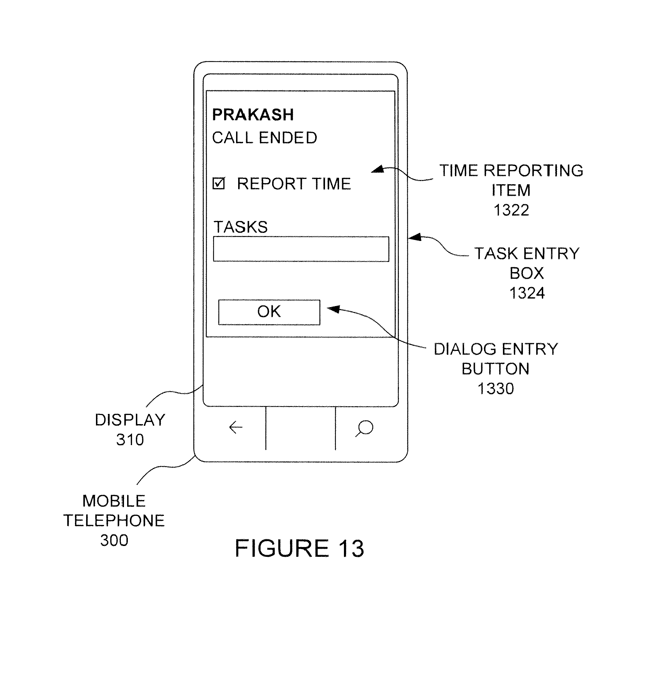

Referring now to Fig. 13, an example of a dialog is illustrated in the display (310) for reporting time after a call with a business contact from the work tracking system. The dialog of Fig. 13 can include a time reporting item (1322) for indicating that time is to be reported for that telephone call, and a task entry box (1324) for entering a task to be associated with reported time for the meeting. Additionally, a dialog entry button (1330) can be selected when the information has been entered in the dialog. If the time reporting item (1322) has been selected, then selection of the dialog entry button (1330) can serve as user input to confirm that time is to be reported for the meeting, and the captured time information (including the information entered in the dialog of Fig. 13) can be sent to the work tracking system.

While specific examples have been shown for reporting time for a meeting and a telephone call, time may also be automatically captured for other events associated with a business contact from the work tracking system. For example, such other events may include sending an email message, sending a text message, completing a chat session, etc.

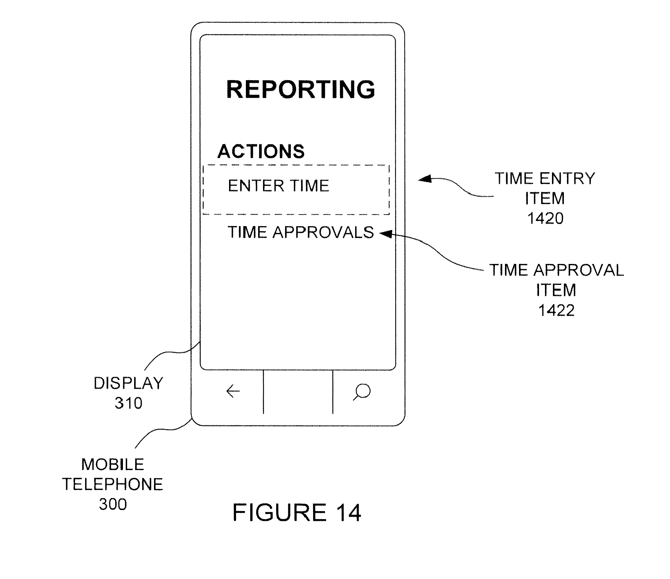

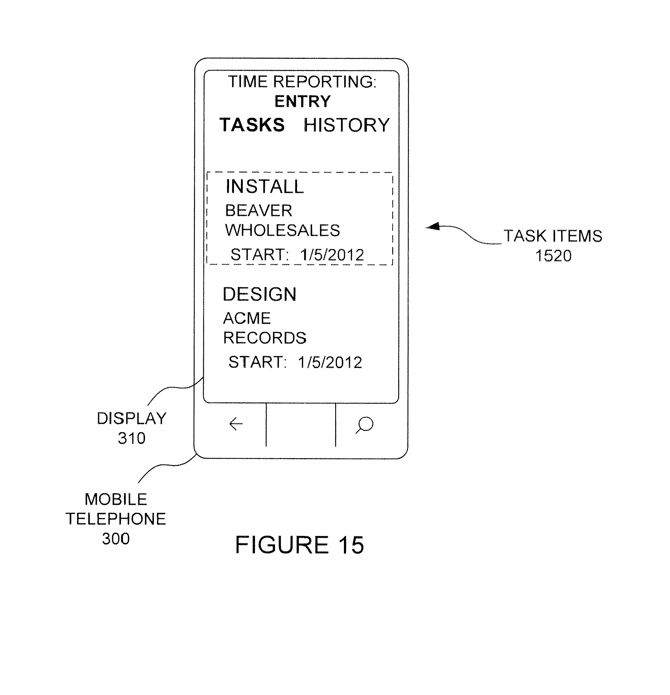

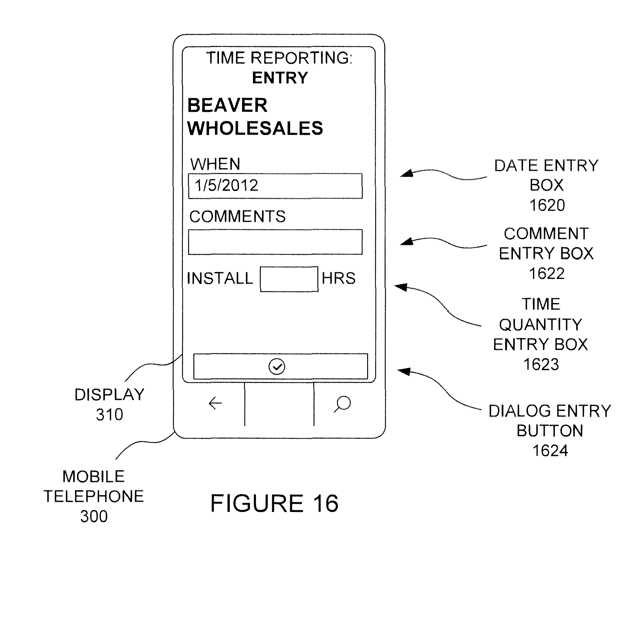

The mobile telephone may also allow time information to be entered manually. Referring to Fig. 14, a dialog for the reporting application on the mobile telephone (300) can include a time entry item (1420) and a time approval item (1422). Selection of the time approval item (1422) can result in a dialog (not shown) being displayed for listing time reporting items that are pending approval by user input and/or time reporting items that have already been approved. Additionally, the time entry item (1420) can be selected to manually enter time information to be reported to the work tracking system. For example, selection of the time entry item (1420) can result in the display of the dialog illustrated in Fig. 15, which can list task items (1520). A task item (1520) can be selected (as illustrated by the dashed lines around the INSTALL task item (1520) in Fig. 15) to associate that task with the time information to be entered. Additionally, after a task item (1520) has been selected, a dialog can be displayed for entering other information. An example of such a dialog is illustrated in Fig. 16. For example, the dialog may include a date entry box (1620) for entering the date for the time information to be reported, a comment entry box (1622) for entering comments for the information to be reported, and a time quantity entry box (1623) for entering a quantity of time (e.g., in hours) for the time information to be reported. Selection of a dialog entry button (1624) can result in the time information (including the time information entered in the dialog of Fig. 16 as well as the selected task) being reported to the work tracking system.

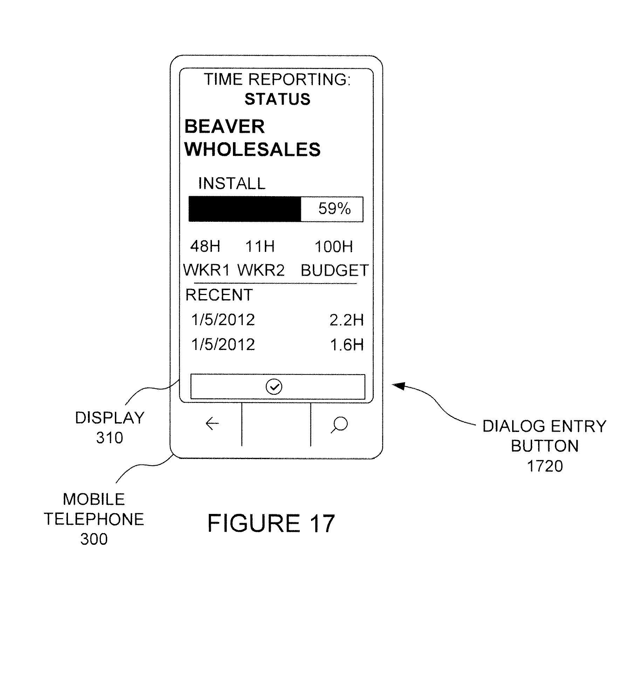

The mobile telephone (300) can also receive status information from the work tracking system. An example of a display of such information for a task is illustrated in Fig. 17. For example, the display may include a progress bar indicating the percentage of budgeted time that has been entered (59% in the example). The display may also indicate how many hours have been reported by each user profile (WKR1 and WKR2 in the example), and how much time is budgeted for the task. These hours can include hours reported from all devices to the work tracking system. Additionally, the display may list recent time information items that have been reported in a "RECENT" section of the display, as illustrated at the bottom of the display (310) in Fig. 17. Additionally, the display can include a dialog entry button (1720) that can be selected to close the status display.

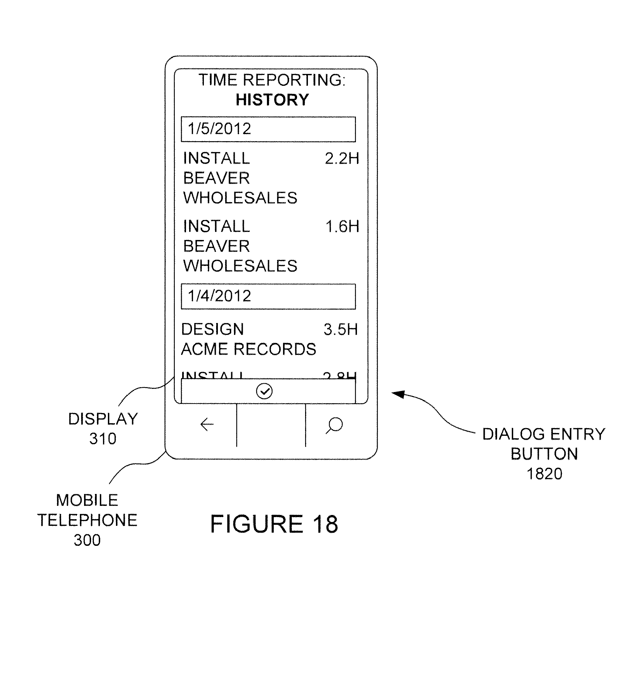

Referring to Fig. 18, the mobile telephone can also maintain a history of captured time information. The history can be listed in a history display, as is illustrated in Fig. 18. The history may include captured time information that has been reported as well as captured time information that has not been reported. Each time information item listed in the history may include an indicator (not shown) of whether the time information for that item has been reported. As with the other dialogs discussed herein, the history list may be scrolled if all the information does not fit on the display (310). The history may be kept for some period of time after the time information is captured, such as seven days, fourteen days, or some other period. The history display can include a dialog entry button (1820), which can be selected to close the history display.

### IV. Techniques for Reporting Work with User Profile Contacts

Several techniques for reporting work with user profile contacts will now be discussed. Each of these techniques can be performed in a computing environment. For example, each technique may be performed in a computer system that includes at least one processor and memory including instructions stored thereon that when executed by at least one processor cause at least one processor to perform the technique (memory stores instructions (e.g., object code), and when processor(s) execute(s) those instructions, processor(s) perform(s) the technique). Similarly, one or more computer-readable storage media may have computer-executable instructions embodied thereon that, when executed by at least one processor, cause at least one processor to perform the technique.

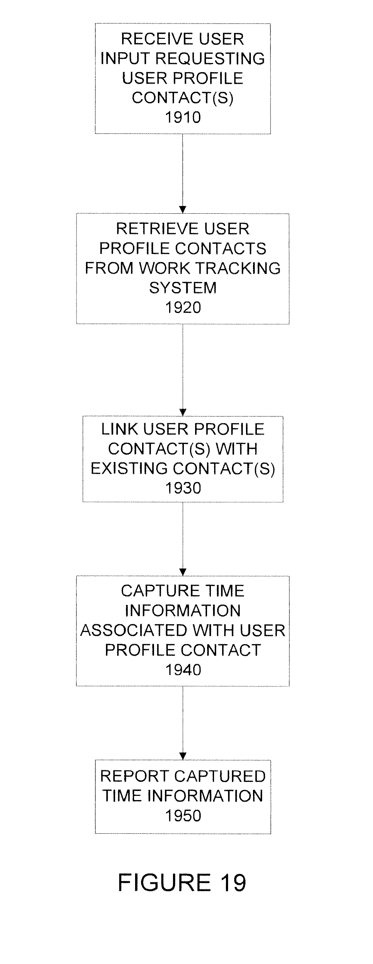

Referring to Fig. 19, a technique for reporting work with user profile contacts will be described. The technique can include receiving (1910) user input at a client computing device. The user input can request one or more contacts for a user profile in a work tracking system that is remote from the client computing device. Additionally, in response to the user input requesting retrieval, the information on one or more user profile contacts associated with the user profile in the work tracking system can be retrieved (1920). At least one of the one or more user profile contacts can be linked (1930) with one or more corresponding existing contacts in the client computing device.

Time information that is associated with one of the user profile contact(s) can be captured (1940) in the client computing device. The time information can be associated with one of the user profile contact(s). Capturing (1940) time information can include capturing at least a portion of the time information automatically. For example, capturing (1940) the time information can include automatically capturing at least a portion of the time information from a time-based event record in the client computing device. Capturing (1940) time information may include capturing time information for a telephone call made using the client computing device, capturing time information for a message (e.g., a text message, email message, etc.) sent using the client computing device, or capturing appointment time information from a time management application on the client computing device. Also, capturing (1940) the time information may include receiving at least a portion of the time information in user input.

Additionally, the technique can include reporting (1950) the captured time information over a computer network to the work tracking system. The technique may include receiving user input confirming that the captured time information is to be reported, and reporting (1950) the captured time information may be performed in response to this confirming user input. Reporting (1950) the captured time information to the work tracking system can include sending the captured time information over a computer network to a computer service that is configured to communicate with the work tracking system. The service may be a cloud service that is remote form the work tracking system and from the client computing device.

The captured time information may be associated with a task in the work tracking system, such as where the captured time information indicates such a task. The technique may include receiving from the work tracking system information regarding time reported for the task. The information regarding time reported can include information regarding time reported from one or more devices other than the client computing device. A representation of the information regarding time reported for the task can be displayed on the client computing device. Also, a history of captured time information reported to the work tracking system can be maintained, such as where such a history is maintained by the client computing device for time information reported from the client computing device.

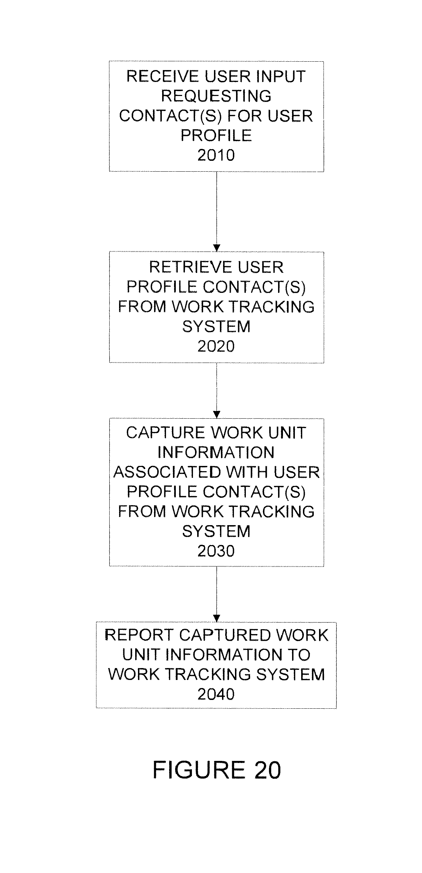

Referring now to Fig. 20, another technique for reporting work with user profile contacts will be described. The technique can include receiving (2010) user input at a client computing device (e.g., a mobile telephone or some other client computing device), the user input requesting one or more contacts for a user profile in a work tracking system that is remote from the client computing device. In response to the user input, one or more user profile contacts associated with the user profile in the work tracking system can be retrieved (2020) from the work tracking system.

Work unit information (such as time information, units produced by the worker, units consumed by the worker, number of messages sent by a worker, etc.) associated with one of the one or more user profile contacts can be captured (2030) in the client computing device. Capturing (2030) the work unit information can include automatically capturing at least a portion of the work unit information from a time-based event record in the client computing device. Also, capturing (2030) the work unit information can include receiving at least a portion of the work unit information as user input.

Additionally, the work unit information can be reported (2040) over a computer network to the work tracking system. Reporting (2040) the captured work unit information can include determining whether communications to the work tracking system are currently available (for example, this may be determining whether communications to an intermediary service (e.g., a cloud service) are available, where the intermediary service is configured to communicate with the work tracking system). If communications to the work tracking system are currently available, then the captured work unit information can be reported without waiting. If communications to the work tracking system are not currently available, then the technique can include waiting until communications to the work tracking system are available and automatically reporting the captured work unit information to the work tracking system when communications to the work tracking system are available.

The technique may further include linking at least one of the user profile contact(s) with one or more corresponding existing contacts in the client computing device. Also, the technique of Fig. 20 may also include receiving user input confirming that the captured work unit information is to be reported, where reporting the captured work unit information can be performed in response to the confirming user input.

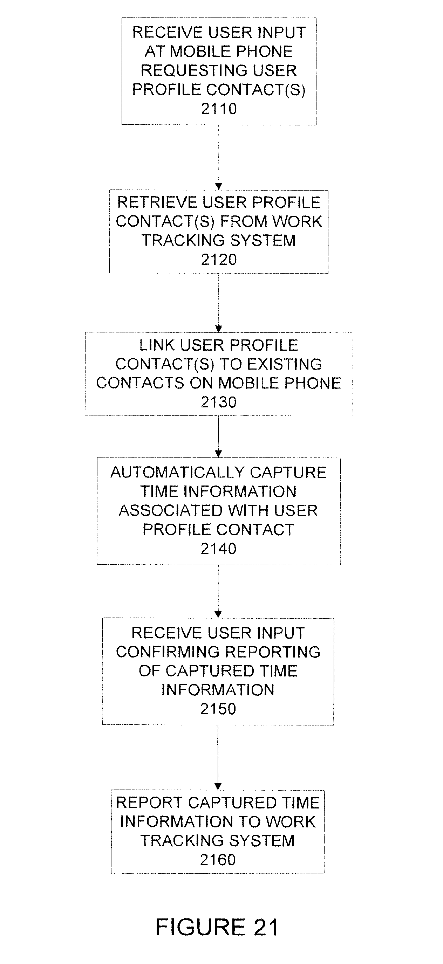

Referring now to Fig. 21, yet another technique for reporting work with user profile contacts will be described. The technique can include receiving (2110) user input at a mobile telephone device. The user input can request one or more contacts for a user profile in a work tracking system that is remote from the mobile telephone device. In response to this user input, information on one or more user profile contacts associated with the user profile in the work tracking system can be retrieved (2120). Also, at least one of the user profile contact(s) can be linked (2130) with one or more corresponding existing contacts in the client computing device. Time information can be automatically captured (2140) from a time-based event record in the mobile telephone. The time information can be associated with one of the user profile contact(s). User input confirming that the captured time information is to be reported can be received (2150). In response to this confirming user input, the captured time can be reported (2160) over a computer network to the work tracking system.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer-implemented method, comprising:
receiving user input at a client computing device (210), the user input requesting one or more contacts (244) for a user profile (220) in a work tracking system (214) that is remote from the client computing device (210);
in response to the user input requesting retrieval, retrieving from the work tracking system (214) information on one or more user profile contacts (244) associated with the user profile (220) in the work tracking system (214);
linking at least one of the one or more user profile contacts (244) with one or more corresponding existing contacts (242) in the client computing device (210);
capturing time information (232) in the client computing device (210), the time information (232) being associated with one of the one or more user profile contacts (244); and
reporting the captured time information (232) over a computer network (212) to the work tracking system (214).

2. The method of claim 1, wherein capturing time information comprises automatically capturing at least a portion of the time information from a time-based event record in the client computing device.

3. The method of claim 1, further comprising receiving user input confirming that the captured time information is to be reported, wherein reporting the captured time information is performed in response to the confirming user input.

4. The method of claim 1, wherein capturing time information comprises capturing time information for a message sent using the client computing device.

5. The method of claim 1, wherein capturing time information comprises capturing appointment time information from a time management application on the client computing device.

6. The method of claim 1, further comprising maintaining on the client computing device a history of captured time information reported to the work tracking system.

7. The method of claim 1, wherein reporting the captured time information to the work tracking system comprises sending the captured time information over a computer network to a computer service that is configured to communicate with the work tracking system, wherein the service is remote from the work tracking system and from the client computing device.

8. The method of claim 1, wherein the captured time information is associated with a task in the work tracking system, and wherein the method further comprises:
receiving from the work tracking system information regarding time reported for the task, the information regarding time reported comprising information regarding time reported from one or more devices other than the client computing device; and
displaying on the client computing device a representation of the information regarding time reported for the task.

9. One or more computer-readable storage media having computer-executable instructions embodied thereon that, when executed by at least one processor, cause at least one processor to perform acts comprising:
receiving user input at a client computing device (210), the user input requesting one or more contacts (244) for a user profile in a work tracking system (214) that is remote from the client computing device (210);
in response to the user input requesting retrieval, retrieving from the work tracking system (214) information on one or more user profile contacts (244) associated with the user profile (220) in the work tracking system (214);
capturing work unit information (232) in the client computing device (210), the work unit information (232) being associated with one of the one or more user profile contacts (244); and
reporting the captured work unit information (232) over a computer network (212) to the work tracking system (214).

10. A computer system comprising at least one processor, and memory comprising instructions stored thereon that when executed by at least one processor cause at least one processor to perform acts comprising:
receiving user input at a mobile telephone device (300), the user input requesting one or more contacts (244) for a user profile (220) in a work tracking system (214) that is remote from the mobile telephone device (300);
in response to the user input requesting retrieval, retrieving from the work tracking system (214) information on one or more user profile contacts (244) associated with the user profile (220) in the work tracking system (214);
linking at least one of the one or more user profile contacts (244) with one or more corresponding existing contacts (242) in the client computing device (210);
automatically capturing time information (232) from a time-based event record (240) in the mobile telephone (300), the time information (232) being associated with one of the one or more user profile contacts (244);
receiving user input confirming that the captured time information (232) is to be reported; and
in response to the user input confirming that the captured time information (232) is to be reported, reporting the captured time information (232) over a computer network (212) to the work tracking system (214).
